# EUROPEAN PATENT SPECIFICATION

(11) **EP 3 792 198 B1**
(45) Date of publication and mention of the grant of the patent: **28.02.2024**
(21) Application number: 19196949.2
(22) Date of filing: 12.09.2019
(51) Int. Cl.: B65D 90/48, G01M 11/00, G01M 11/08, B65D 88/34

(54) **FLOATING ROOF MONITORING**
SCHWIMMDACHÜBERWACHUNG
SURVEILLANCE DE TOIT FLOTTANT

(43) Date of publication of application: 17.03.2021
(73) Proprietor: Rosemount Tank Radar AB, 435 23 Mölnlycke (SE)
(72) Inventor: FRÖVIK, Christer, 582 29 LINKÖPING (SE); BLOMBERG, Urban, 582 52 LINKÖPING (SE)
(74) Representative: Kransell & Wennborg KB

(56) References cited:
- EP-A1- 3 236 218
- EP-A1- 3 505 878
- WO-A1-2008/010702
- WO-A1-2018/226126
- CN-U- 205 882 173
- US-A1- 2012 007 768
- US-A1- 2013 120 155
- US-A1- 2014 111 642
- US-A1- 2017 302 001
- US-A1- 2019 195 629
- US-A1- 2021 131 854

## Description

### Technical Field of the Invention

The present invention relates to a monitoring system, and to a method of determining a status of a floating roof of a storage tank.

### Technical Background

In certain tanks, in particular storage tanks for petroleum products at refineries and the like, use is frequently made of a floating roof which floats on the product in liquid state in the tank and therefore is displaceable in a vertical direction. Thus, the floating roof is capable of following the level of the product in liquid state when the product is discharged from or filled into the tank. Floating roofs of this type are used for preventing leakage of product vapor from the tank into the atmosphere and ingress of rain and the like into the space defined by the tank walls and the floating tank roof. Typically, the prevention of leakage and ingress is enhanced by a sealing arrangement fitted along a perimeter of the floating roof for providing sealing and sliding contact with the inner wall of the tank. Further, using a roof that floats on the product in liquid state enables minimizing a volume between the liquid surface and the roof, thereby minimizing the amount of product in vapor phase in the tank.

Floating roofs for these purposes are usually manufactured as large steel structures with float means (pontoons) and have a weight in the order of a hundred tons and a diameter of tens of meters. With regard to size and environmental aspects, it is important to monitor the normal operation and undisturbed floating of the floating roof, such that any disturbance thereof is identified at an early stage.

Different situations of disturbance to normal operation and floating have been observed in the past.

In filling of the tank, part of the floating roof could get stuck to the inner wall of the tank. As the filling proceeds, the floating roof would then be partially flooded by product in liquid state, potentially resulting in a hazardous situation.

In discharging of the tank, part of the floating roof could get stuck to the inner wall of the tank. As the discharging proceeds considerable amounts of air could enter the space between the liquid and the floating roof. In the event of a subsequent roof collapse, an explosive atmosphere could form above the collapsed roof.

Regulations tend to become stricter to minimize evaporation of liquid from floating roof tanks. This has resulted in floating roof designs which exhibit a higher friction in the sealing arrangement between the perimeter of the floating roof and the inner wall of the tank. This increase in friction could increase the risk of a roof getting stuck.

Abnormal function and floating may similarly occur if a large amount of rain or snow is present or unevenly distributed on the roof. This could cause the roof to sink or tilt and collapse.

For years, issues like those described above have attracted attention in the petroleum industry. There seems to be an increasing demand for systems that address the issues.

Various existing methods of monitoring floating roofs are based on measuring relative positions or inclinations of several locations on the floating roof when in operation. There is also monitoring that combines this with, for instance, video monitoring or detection of the presence of gas on top of the floating roof.

US 2014/111642 relates to a visual monitoring system for covered storage tanks. The visual monitoring system can be used to determine the elevation of the floating roof inside of the aboveground storage tank (AST). The location of an imaging unit and the location of one or more visible markers located on the floating roof, can be determined during installation. When filling or emptying the AST, the floating roof rises or falls within the AST, and the angle will thereby decrease or increase, respectively. By using the location of a marker within an image from a camera, the elevation of the roof can be manually determined by a human operator. Alternatively, the location of the marker within the image can be automatically determined using known methods from computer vision, thereby enabling the automated computation of the elevation of the floating roof.

US 2012/007768 relates to a radar level gauge system comprising a bottom reflector arranged at the bottom of the tank.

WO 2008/010702 relates to a storage tank for a liquid, which comprises a bottom and upright walls and which can be closed by means of a cover element that floats on the liquid, which cover element substantially abuts against the upright walls with its circumferential edge, whilst determining means are present for determining the liquid level in the tank. To get an adequate perception of the position both of the liquid surface and of the cover element floating thereon, the storage tank is provided with detection means, which detect the position of the cover element in the storage tank. The detection means may include several position sensors.

EP 3 505 878 relates to a method for detecting the tilt of a floating roof floating on a medium stored in a tank, whereby a radar level gauge is mounted in a fixed position on the tank, whereby the radar level gauge is emitting signals in the direction of the floating roof and receiving the echo signals reflected on the surface of the floating roof.

US 2017/302001 discloses a storage tank with a floating roof, and a radar level gauge mounted on a support structure for measuring the position of the floating roof. A target plate or reflector plate is arranged below the radar level gauge, in order to provide a distinguishable reflection of emitted waves. The target plate is arranged in a plane normal to the general direction of propagation of radar signals emitted by the radar level gauge.

### Summary

In view of the above, a general object of the present invention is to provide for improved monitoring of a floating roof, in particular requiring less complex installation of equipment.

Aspects of the present invention are based on the realization that selective evaluation of reflected energy traveling from the floating roof in each propagation direction of a plurality of different propagation directions can be used as a basis for determining the status of the floating roof, and that this allows floating roof monitoring using a single radar level gauge system arranged above the floating roof.

According to a first aspect of the present invention, it is provided a method as defined by claim 1.

According to a second aspect of the present invention, it is provided a floating roof monitoring system as defined by claim 5.

Embodiments of the method and system according to the present invention allow determination of various aspects of the status of the floating roof. Such aspects may, for example, include an indication of a local inclination of the floating roof, positions of a plurality of predefined locations on the floating roof, the distribution of stress in the roof, the location of the floating roof in relation to the product in liquid state in the tank, etc. Based on determined information about the status of the floating roof, an early warning can be provided to the tank operator indicating that the floating roof is not functioning as intended and, optionally, also indicating the type of malfunction.

The term "selectively evaluating"/"selective evaluation" should, in the context of the present application, be understood to mean that at least one property of the reflected energy traveling from the floating roof is individually evaluated for the different propagation directions. Examples of the at least one evaluated property may, for example, include a magnitude of the reflected energy, a distance to an origin (point/area of reflection) of the reflected energy, etc.

The antenna arrangement may be realized in the form of a radiating antenna that is controllable to transmit and/or receive towards/from different directions. Such an antenna may be physically movable, and/or the direction of preferred transmission/reception may be electronically controllable. In the latter case, the antenna may be a so-called patch antenna, which may be controlled using, *per se*, well-known phased-array control methods. Alternatively, or in combination, the antenna arrangement may comprise a plurality of antennas configured to transmit/receive towards/from mutually different directions.

The "transceiver" may be one functional unit capable of transmitting and receiving electromagnetic signals or may be a system comprising separate transmitter and receiver units.

It should be noted that the processing circuitry may be provided as one device or several devices working together.

In summary, the present invention thus relates to a method of determining a status of a floating roof of a storage tank using a radar level gauge system arranged above the floating roof, the radar level gauge system being controllable to selectively evaluate reflected energy traveling towards the radar level gauge system in each propagation direction of a plurality of different propagation directions, the method comprising the steps of: radiating, by the radar level gauge system, an electromagnetic transmit signal towards the floating roof; receiving, by the radar level gauge system, an electromagnetic reflection signal resulting from reflection of the transmit signal at the floating roof; selectively evaluating, by the radar level gauge system based on the reflection signal, reflected energy traveling from the floating roof towards the radar level gauge system in each propagation direction of the plurality of different propagation directions; and determining the status of the floating roof based on the selective evaluation.

### Brief Description of the Drawings

These and other aspects of the present invention will now be described in more detail, with reference to the appended drawings showing a currently preferred embodiment of the invention, wherein:
Fig 1 schematically illustrates an exemplary floating roof tank arrangement comprising a floating roof monitoring system according to an embodiment of the present invention;
Fig 2 is a schematic illustration of an exemplary radar level gauge system comprised in the floating roof monitoring system in fig 1;
Fig 3 is a flow-chart schematically illustrating example embodiments of the method according to the present invention;
Figs 4A-B schematically illustrate example embodiments of the method and system according to the present invention;
Figs 5A-B schematically illustrate another example of a floating roof monitoring system; and
Fig 6 schematically illustrates further example embodiments of the method and system according to the present invention.

### Detailed Description of Example Embodiments of the Invention

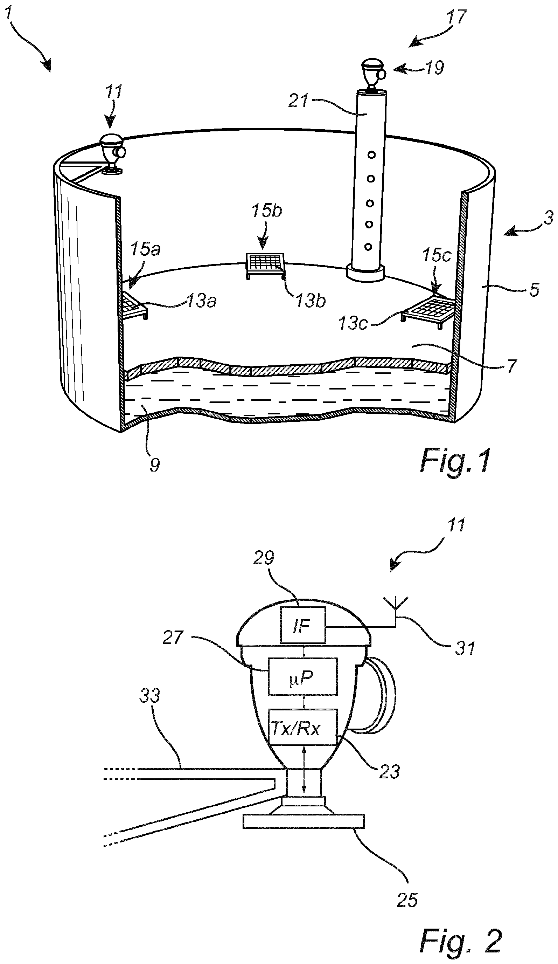

Fig 1 schematically shows a floating roof monitoring system 1 according to example embodiments of the present invention. The floating roof monitoring system 1 is arranged at a storage tank 3 having a tank wall 5 and a floating roof 7. The floating roof 7 is floating on product 9 in liquid state in the storage tank 3. As mentioned in the Background section, the product 9 may be a petroleum product, or any other liquid state product having sufficient density for the floating roof 7 to float (typically on pontoons that are not shown in fig 1).

As is schematically indicated in fig 1, the floating roof monitoring system 1 comprises a radar level gauge system 11 for arrangement above the floating roof 7 and optional reflectors 13a-c shown in fig 1 to be arranged in corresponding target areas 15a-c of the floating roof 7. It should be noted that embodiments of the floating roof monitoring system 1 according to of the invention may comprise only the radar level gauge system 11, in particular when the floating roof 7 is already provided with structures suitable for reflecting microwaves.

In addition to the floating roof monitoring system 1, the tank 3 in fig 1 is also provided with a filling level determining system 17, including a radar level gauge unit 19, in a *per se* known configuration, mounted on a still pipe 21, for measuring the filling level of the product 9 in the tank 3.

Fig 2 is an enlarged view of the radar level gauge system 11 comprised in the floating roof monitoring system 1 in fig 1, schematically indicating functional parts of the radar level gauge system 11. Referring to fig 2, the radar level gauge system 11 comprises a transceiver 23, an antenna arrangement, here in the form of a patch antenna 25, processing circuitry 27, a communication interface 29, and a communication antenna 31 for enabling wireless communication between the radar level gauge system 11 and an external unit, such as a control system (not shown). The radar level gauge system 11 in fig 2 is controllable to selectively evaluate reflected energy traveling towards the antenna arrangement 25 in a plurality of different propagation directions. This may be achieved, in *per* se well-known ways, for example by controlling the superposition of energy picked up by the patches of the patch antenna 25, by physically directing an antenna in different directions at different times, or by providing the radar level gauge system 11 with an antenna arrangement comprising a plurality of antennas oriented in mutually different directions.

The radar level gauge system 11 comprised in the floating roof monitoring system 1 may be fixedly attached to the tank wall 5, by means of a suitable support arrangement, such as the support 33 schematically indicated in fig 2.

In the example embodiment of fig 2, the communication from/to the radar level gauge system 11 is indicated as being wireless communication. Alternatively, communication may, for example, take place over an analog and/or digital wire-based communication channel. For instance, the communication channel may be a two-wire 4-20 mA loop and a signal indicative of the status of the floating roof may be communicated by providing a certain current corresponding to the filling level on the two-wire 4-20 mA loop. Digital data may also be sent across such a 4-20 mA loop, using the HART protocol. Furthermore, pure digital communication protocols such as Modbus or Foundation Fieldbus may be used.

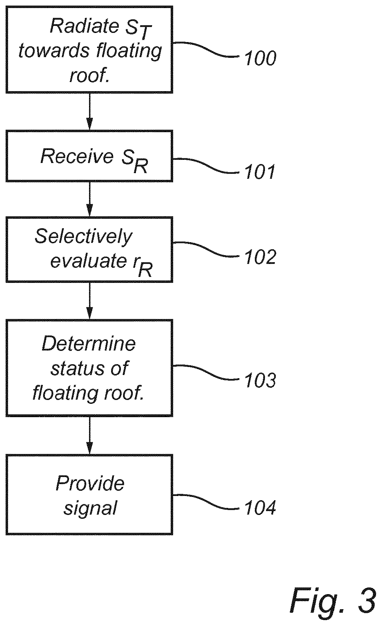

In the following, example embodiments of the method according to the present invention will be described with reference to the flow-chart in fig 3, and to other figures as indicated in the text.

In a first step 100, an electromagnetic transmit signal S_{T} is radiated towards the floating roof 7 by the radar level gauge system 11 comprised in the floating roof monitoring system 1. The transmit S_{T} signal may be formed by a set of measurement sweeps (i.e. one or more measurement sweeps), or the transmit signal S_{T} may be a pulsed signal. Furthermore, depending on the particular embodiments of the monitoring system and method according to the present invention, the transmit signal S_{T} may exhibit a substantially fixed radiation pattern, or may sequentially be directed in different propagation directions towards different target areas 15a-c on the floating roof 7.

In the subsequent step 101, the radar level gauge system 11 comprised in the floating roof monitoring system 1 receives, via the antenna arrangement 25, an electromagnetic reflection signal S_{R} resulting from reflection of the transmit signal S_{T} at the floating roof 7.

After having received the reflection signal S_{R}, the radar level gauge system 11 selectively evaluates, in step 102, reflected energy traveling from the floating roof 7 towards the antenna arrangement 25 in each propagation direction **r**_{R} of a plurality of different propagation directions, based on the reflection signal S_{R}.

Based on the selective evaluation carried out in step 102, the status of the floating roof 7 is then determined in step 103. A signal indicative of the determined status may then be provided in step 104, either continuously, or conditionally depending on the determined status of the floating roof 7.

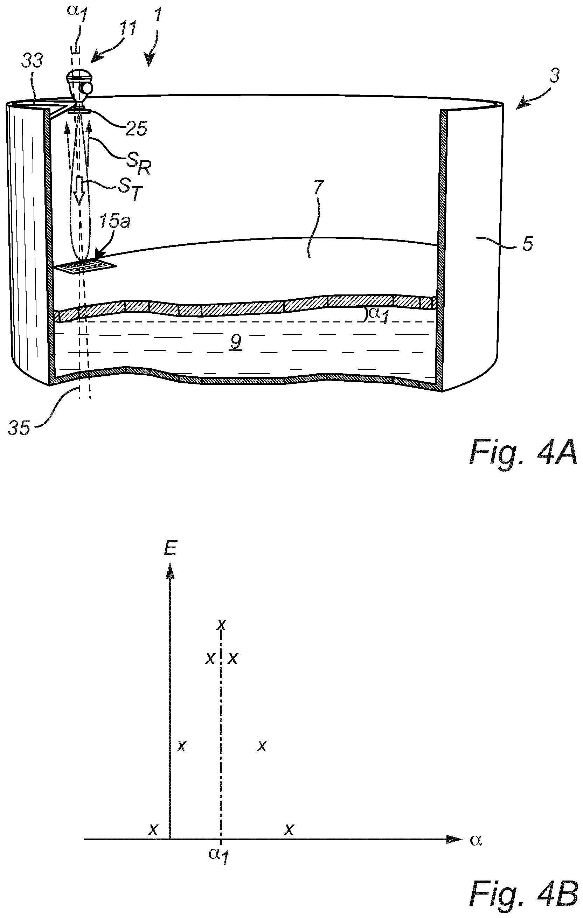

Figs 4A-B schematically illustrate example embodiments of the method and system according to the present invention.

Fig 4A is a schematic illustration of a floating roof monitoring system 1 in which the radar level gauge system 11 comprised therein is configured to generate, transmit and radiate a transmit signal S_{T} substantially vertically towards a first target area 15a of the floating roof 7. The radiated energy of the transmit signal may have its maximum along the vertical line 35 in fig 4A. As was explained above with reference to the flow-chart in fig 3 (step 101), the reflected signal S_{R} is received, and the reflected energy traveling from the floating roof 7 towards the antenna arrangement 25 is selectively evaluated for each propagation direction in a plurality of different propagation directions (step 102). In the example embodiment illustrated in fig 4A, the evaluated propagation directions are among the directions that are inside the reflected radiation pattern indicated by S_{R} and hit the antenna 25.

In the example embodiments of figs 4A-B, the selective evaluation step (step 102) involves determining, for each propagation direction of the plurality of propagation directions, a measure indicative of an amount of reflected energy traveling from the first target area 15a towards the antenna arrangement 25. In fig 4B, the selectively evaluated propagation directions are represented by corresponding angles α between the respective propagation directions and the vertical line 35 in fig 4A.

The step of determining the status of the floating roof (step 103) here comprises estimating an inclination α₁ of the first target area 15a based on the measure indicative of the amount of reflected energy, indicated by 'E' on the vertical axis of the diagram in fig 4B, traveling from the first target area 15a towards the antenna arrangement 25 determined for each propagation direction in the plurality of propagation directions. In this case, as is indicated in figs 4A-B, the direction (represented by the angle α₁) of the maximum amount of reflected energy is taken to correspond to the inclination of the floating roof 7 at the first target area 15a. A deviation or change in the inclination of the floating roof 7 at the first target area 15a may indicate that the floating roof 7 is tilting (as is schematically indicated in fig 4A) and/or that the floating roof 7 is deformed at the first target area 15a. In either case, the estimated inclination α₁ may be compared with a predefined threshold inclination, and a signal indicative thereof may be provided when the estimated inclination α₁ exceeds the predefined threshold inclination.

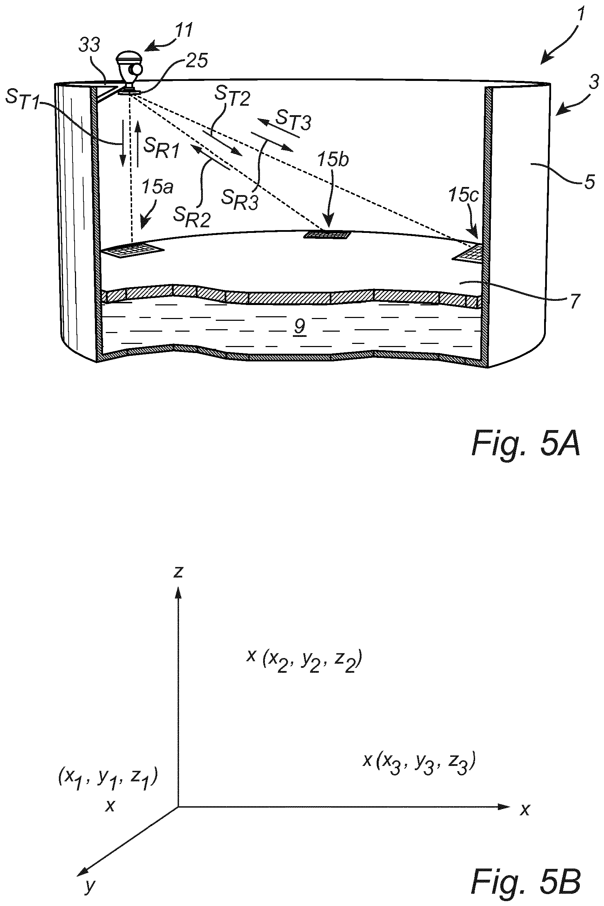

Figs 5A-B schematically illustrate another example of a floating roof monitoring system.

Fig 5A is a schematic illustration of a floating roof monitoring system 1 in which the radar level gauge system 11 comprised therein is configured to generate, transmit and radiate a transmit signal S_{T} including a first signal portion S_{T1} directed substantially vertically towards a first target area 15a of the floating roof 7, a second signal portion S_{T2} directed towards a second target area 15b, and third signal portion S_{T3} direct towards a third target area 15c. The floating roof monitoring system 1 in fig 5A may optionally comprise microwave reflector devices arranged in the target areas 15a-c. It should be noted that the first S_{T1}, second S_{T2} and third S_{T3} signal portions may be transmitted/radiated as separate narrow lobe signals or as portions of a wide lobe signal S_{T}.

As was explained above with reference to the flow-chart in fig 3 (step 101), the reflected signal is received, and the reflected energy traveling from the floating roof 7 towards the antenna arrangement 25 is selectively evaluated for each propagation direction in a plurality of different propagation directions (step 102). In fig 5A, the evaluated propagation directions are the directions from the respective target areas 15a-c to the antenna arrangement 25.

In the example of figs 5A-B, the selective evaluation step (step 102) involves determining a first position (x₁, y₁, z₁) of the first target area based on a timing relation between S_{T1} and S_{R1}, determining a second position (x₂, y₂, z₂) of the second target area based on a timing relation between S_{T2} and S_{R2}, and determining a third position (x₃, y₃, z₃) of the third target area based on a timing relation between S_{T3} and S_{R3}.

The step of determining the status of the floating roof (step 103) here comprises determining a representation of the floating roof 7 based on the respective position of each of the target areas 15a-c of the floating roof 7. The representation based on the three positions in fig 5B may be used to determine a representation of the floating roof 7 in the form of a plane having an inclination direction and magnitude. Based on an additional evaluation, from which the local inclination for each target area 15a-c can be determined, as was described further above in connection with figs 4A-B for a single target area, a more complex representation of the floating roof 7 is formed. Such a representation, carrying information about global orientation of the floating roof 7 as well as information about local inclinations, is used to determine changes in the shape of the floating roof 7. If the determined representation of the floating roof 7 fails to fulfill at least one predefined criterion, a signal indicative thereof can be provided.

In any one of the example embodiments described so far, a measure indicative of a vertical distance between the radar level gauge system 11 of the floating roof monitoring system 1 and the floating roof 7 may be determined based on the transmit signal S_{T} and the reflection signal S_{R}, and the determination of the status of the floating roof 7 may be additionally based on this measure.

If, for instance, it is determined based on this vertical distance that the floating roof 7 moves less or more than expected when product 9 is added to or removed from the tank 3 at known rates of addition or removal, this may be taken as an indication that the floating roof 7 is not following the movements of the liquid product 9 in a satisfactory manner, and a signal indicative of this may be provided.

Furthermore, a measure indicative of a filling level of the product 9 in the tank 3 may be acquired from the filling level determining system 17 (see fig 1), and the determination of the status of the floating roof 7 may be additionally based on the measure indicative of the filling level. For example, a larger than expected difference between the level of the product 9 and the level of the floating roof 7 may indicate a gas-filled gap between the surface of the liquid product 9 and the floating roof 7

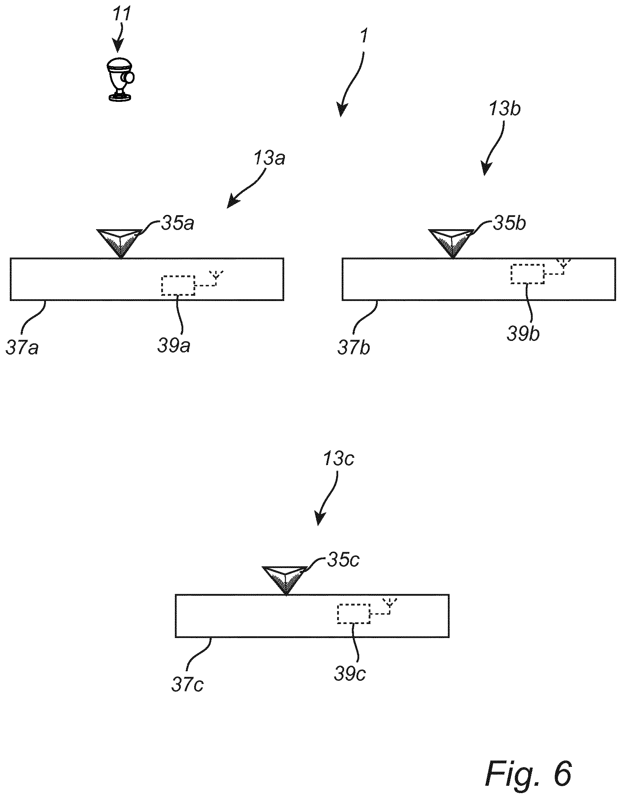

Fig 6 schematically illustrates further example embodiments of the method and system according to the present invention. The floating roof monitoring system 1 schematically illustrated in fig 6 comprises a radar level gauge system 11, and first 13a, second 13b, and third 13c microwave reflector devices. In the example configuration of fig 6, each of the microwave reflector devices 13a-c includes a retroreflector 35a-c for microwave radiation, an attachment structure 37a-c for attaching the microwave reflector device 13a-c to its target area 15a-c of the floating roof 7, and, optionally, a sensing device 39a-c. In embodiments including the optional sensing device 39a-c, the sensing device 39a-c may, for example, be a battery-powered inclination sensor or any other type of useful sensor. Advantageously, each sensing device 39a-c may be capable of wireless communication with the radar level gauge system 11 comprised in the floating roof monitoring system 1 and/or with an external system, such as a host system. Signals from the sensing devices 39a-c comprised in the microwave reflector devices 13a-c can be used to enhance the determined representation of the floating roof 7, which may in turn be used for providing enhanced information about the status of the floating roof 7.

The person skilled in the art realizes that the present invention by no means is limited to the preferred embodiments described above. On the contrary, many modifications and variations are possible within the scope of the appended claims.

## Claims

1. A method of determining a status of a floating roof (7) of a storage tank (3) using a radar level gauge system (11) arranged above the floating roof (7), the radar level gauge system (11) including a transceiver (23), an antenna arrangement (25), and processing circuitry (27),
**characterized in that:**
the radar level gauge system (11) is controllable to selectively evaluate reflected energy traveling towards the antenna arrangement (25) in each propagation direction of a plurality of different propagation directions, the method comprising the steps of:
radiating (100), by the radar level gauge system, an electromagnetic transmit signal (S_{T}) towards a first target area (15a) on the floating roof (7);
receiving (101), by the radar level gauge system, an electromagnetic reflection signal (S_{R}) resulting from reflection of the transmit signal (S_{T}) at the floating roof (7);
selectively evaluating (102), by the radar level gauge system based on the reflection signal (S_{R}), reflected energy traveling from the floating roof (7) towards the antenna arrangement (25) in each propagation direction of the plurality of different propagation directions, comprising determining, for each propagation direction in the plurality of propagation directions based on the electromagnetic reflection signal resulting from reflection of the transmit signal at the target area, a measure indicative of an amount of reflected energy traveling from the first target area towards the antenna arrangement;
estimating an inclination (α₁) of the first target area (15a) based on the measure; and
determining the status of the floating roof based on the estimated inclination.

2. The method according to claim 1, further comprising the steps of:
comparing the estimated inclination (α₁) of the first target area (15a) with a predefined threshold inclination; and
providing, when the estimated inclination exceeds the predefined threshold inclination, a signal indicative thereof.

3. The method according to claim 1 or 2, wherein:
the method further comprises the step of determining, based on a timing relation between the transmit signal (S_{T}) and the reflection signal (S_{R}), a measure indicative of a vertical distance between a reference position of the radar level gauge system (11) and the floating roof (7); and
the determination of the status of the floating roof is additionally based on the measure indicative of the vertical distance.

4. The method according to any one of the preceding claims, wherein:
the method further comprises the step of acquiring a measure indicative of a filling level of the product in the tank (3); and
the determination of the status of the floating roof (7) is additionally based on the measure indicative of the filling level.

5. A floating roof monitoring system (1), for determining a status of a floating roof (7) of a storage tank (3), the floating roof monitoring system (1) including a radar level gauge system (11) for arrangement above the floating roof (7), the radar level gauge system (11) comprising:
a transceiver (23) for generating, transmitting and receiving electromagnetic signals;
an antenna arrangement (25) coupled to the transceiver (23) for radiating an electromagnetic transmit signal (S_{T}) towards the floating roof (7) and receiving an electromagnetic reflection signal (S_{R}) resulting from reflection of the transmit signal (S_{T}) by the floating roof (7); and
processing circuitry (27) configured to:
control the transceiver (23) to generate and transmit an electromagnetic transmit signal (S_{T});
**characterized by** the process circuitry being further configured to:
selectively evaluate based on an electromagnetic reflection signal resulting from reflection of the transmit signal at the floating roof and received by the transceiver, reflected energy traveling from the floating roof towards the antenna arrangement in each propagation direction of the plurality of different propagation directions; and
carry out the steps of the method of claim 1.

6. The floating roof monitoring system (1) according to claim 5, further comprising at least a first microwave reflector device (13a) arranged in at least the first target area (15a) on the floating roof (7).

7. The floating roof monitoring system (1) according to claim 6, wherein the first microwave reflector device (13a) comprises a retroreflector (35a) for microwave radiation.

8. The floating roof monitoring system (1) according to claim 6 or 7, wherein the floating roof monitoring system (1) comprises the first microwave reflector device (13a) arranged in the first target area (15a) on the floating roof (7) and a second microwave reflector device (13b) for arrangement in a second target area (15b) on the floating roof, laterally spaced apart from the first target area.

9. The floating roof monitoring system (1) according to claim 8, wherein:
the first microwave reflector device (13a) comprises a first sensing device (37a) for sensing a property of the of the floating roof (7) at the first target area (15a) and first communication circuitry (39a) for providing a signal indicative of the sensed property; and
the second microwave reflector device (13b) comprises a second sensing device (37b) for sensing a property of the of the floating roof (7) at the second target area (15b) and second communication circuitry (39b) for providing a signal indicative of the sensed property.

## Patentansprüche

1. Verfahren zum Bestimmen eines Zustands eines Schwimmdachs (7) eines Speichertanks (3) unter Verwendung eines Radarfüllstandsanzeiger-Systems (11), das über dem Schwimmdach (7) angeordnet ist, wobei das Radarfüllstandsanzeiger-System (11) einen Sendeempfänger (23), eine Antennenanordnung (25) und eine Verarbeitungsschaltungsanordnung (27) aufweist, **dadurch gekennzeichnet, dass**:
das Radarfüllstandsanzeiger-System (11) steuerbar ist, um selektiv reflektierte Energie auszuwerten, die sich in Richtung der Antennenanordnung (25) in jeder Ausbreitungsrichtung mehrerer unterschiedlicher Ausbreitungsrichtungen ausbreitet, wobei das Verfahren die Schritte umfasst zum:
Ausstrahlen (100), durch das Radarfüllstandsanzeiger-System, eines elektromagnetischen Sendesignals (S_{T}) in Richtung eines ersten Zielbereichs (15a) auf dem Schwimmdach (7);
Empfangen (101), durch das Radarfüllstandsanzeiger-System, eines elektromagnetischen Reflexionssignals (S_{R}), das sich aus einer Reflexion des Sendesignals (S_{T}) an dem Schwimmdach (7) ergibt;
selektiven Auswerten (102), durch das Radarfüllstandsanzeiger-System basierend auf dem Reflexionssignal (S_{R}), von reflektierter Energie, die sich von dem Schwimmdach (7) in Richtung der Antennenanordnung (25) in jeder Ausbreitungsrichtung der mehreren unterschiedlichen Ausbreitungsrichtungen bewegt, umfassend Bestimmen, für jede Ausbreitungsrichtung in den mehreren Ausbreitungsrichtungen, basierend auf dem elektromagnetischen Reflexionssignal, das sich aus einer Reflexion des Sendesignals an dem Zielbereich ergibt, eines Maßes, das eine Menge an reflektierter Energie angibt, die sich von dem ersten Zielbereich in Richtung der Antennenanordnung bewegt;
Schätzen einer Neigung (α₁) des ersten Zielbereichs (15a) basierend auf dem Maß; und
Bestimmen des Zustands des Schwimmdachs basierend auf der geschätzten Neigung.

2. Verfahren nach Anspruch 1, ferner umfassend die Schritte zum:
Vergleichen der geschätzten Neigung (α₁) des ersten Zielbereichs (15a) mit einer vordefinierten Schwellenneigung; und
Bereitstellen eines Signals, das anzeigt, wenn die geschätzte Neigung die vordefinierte Schwellenneigung überschreitet.

3. Verfahren nach Anspruch 1 oder 2, wobei:
das Verfahren ferner den Schritt umfasst zum Bestimmen, basierend auf einer zeitlichen Beziehung zwischen dem Sendesignal (S_{T}) und dem Reflexionssignal (S_{R}), eines Maßes, das einen vertikalen Abstand zwischen einer Referenzposition des Radarfüllstandsanzeiger-Systems (11) und dem Schwimmdach (7) angibt; und
die Bestimmung des Zustands des Schwimmdachs zusätzlich auf dem Maß basiert, das den vertikalen Abstand angibt.

4. Verfahren nach einem der vorhergehenden Ansprüche, wobei:
das Verfahren ferner den Schritt zum Erfassen eines Maßes umfasst, das einen Füllstand des Produkts in dem Tank (3) angibt; und
die Bestimmung des Zustands des Schwimmdachs (7) zusätzlich auf dem Maß basiert, das den Füllstand angibt.

5. Schwimmdach-Überwachungssystem (1) zum Bestimmen eines Zustands eines Schwimmdachs (7) eines Speichertanks (3), wobei das Schwimmdach-Überwachungssystem (1) ein Radarfüllstandsanzeiger-System (11) zur Anordnung über dem Schwimmdach (7) aufweist, wobei das Radarfüllstandsanzeiger-System (11) umfasst:
einen Sendeempfänger (23) zum Erzeugen, Senden und Empfangen elektromagnetischer Signale;
eine Antennenanordnung (25), die mit dem Sendeempfänger (23) gekoppelt ist, um ein elektromagnetisches Sendesignal (S_{T}) in Richtung des Schwimmdachs (7) auszustrahlen und ein elektromagnetisches Reflexionssignal (S_{R}) zu empfangen, das sich aus einer Reflexion des Sendesignals (S_{T}) durch das Schwimmdach (7) ergibt; und
eine Verarbeitungsschaltungsanordnung (27), die eingerichtet ist zum:
Steuern des Sendeempfängers (23), um ein elektromagnetisches Sendesignal (S_{T}) zu erzeugen und zu senden;
**gekennzeichnet durch** die Verarbeitungsschaltungsanordnung, die ferner eingerichtet ist zum:
selektiven Auswerten, basierend auf einem elektromagnetischen Reflexionssignal, das sich aus einer Reflexion des Sendesignals an dem Schwimmdach ergibt und durch den Sendeempfänger empfangen wird, von reflektierter Energie, die sich von dem Schwimmdach in Richtung der Antennenanordnung in jeder Ausbreitungsrichtung der mehreren unterschiedlichen Ausbreitungsrichtungen bewegt; und
Ausführen der Schritte des Verfahrens nach Anspruch 1.

6. Schwimmdach-Überwachungssystem (1) nach Anspruch 5, ferner umfassend mindestens eine erste Mikrowellen-Reflektorvorrichtung (13a), die mindestens in dem ersten Zielbereich (15a) auf dem Schwimmdach (7) angeordnet ist.

7. Schwimmdach-Überwachungssystem (1) nach Anspruch 6, wobei die erste Mikrowellen-Reflektorvorrichtung (13a) einen Retroreflektor (35a) zur Mikrowellenausstrahlung umfasst.

8. Schwimmdach-Überwachungssystem (1) nach Anspruch 6 oder 7, wobei das Schwimmdach-Überwachungssystem (1) die erste Mikrowellen-Reflektorvorrichtung (13a) umfasst, die in dem ersten Zielbereich (15a) auf dem Schwimmdach (7) angeordnet ist, und eine zweite Mikrowellen-Reflektorvorrichtung (13b) zur Anordnung in einem zweiten Zielbereich (15b) auf dem Schwimmdach, der seitlich von dem ersten Zielbereich beabstandet ist.

9. Schwimmdach-Überwachungssystem (1) nach Anspruch 8, wobei:
die erste Mikrowellen-Reflektorvorrichtung (13a) eine erste Erfassungsvorrichtung (37a) zum Erfassen einer Eigenschaft des Schwimmdachs (7) an dem ersten Zielbereich (15a) und eine erste Kommunikations-Schaltungsanordnung (39a) zum Bereitstellen eines Signals umfasst, das die erfasste Eigenschaft angibt; und
die zweite Mikrowellen-Reflektorvorrichtung (13b) eine zweite Erfassungsvorrichtung (37b) zum Erfassen einer Eigenschaft des Schwimmdachs (7) an dem zweiten Zielbereich (15b) und eine zweite Kommunikations-Schaltungsanordnung (39b) zum Bereitstellen eines Signals umfasst, das die erfasste Eigenschaft angibt.

## Revendications

1. Procédé de détermination d'un état d'un toit flottant (7) d'une cuve de stockage (3) à l'aide d'un système de jauge de niveau à radar (11) disposé au-dessus du toit flottant (7), le système de jauge de niveau à radar (11) incluant un émetteur-récepteur (23), un ensemble d'antenne (25), et un circuit de traitement (27),
**caractérisé en ce que** :
le système de jauge de niveau à radar (11) peut être commandé pour évaluer sélectivement une énergie réfléchie circulant vers l'ensemble d'antenne (25) dans chaque direction de propagation parmi une pluralité de directions de propagation différentes, le procédé comprenant les étapes suivantes :
rayonnement (100), par le système de jauge de niveau à radar, d'un signal de transmission électromagnétique (S_{T}) vers une première zone cible (15a) sur le toit flottant (7) ;
réception (101), par le système de jauge de niveau à radar, d'un signal de réflexion électromagnétique (S_{R}) résultant de la réflexion du signal de transmission (S_{T}) au niveau du toit flottant (7) ;
évaluation sélective (102), par le système de jauge de niveau à radar sur la base du signal de réflexion (S_{R}), de l'énergie réfléchie circulant à partir du toit flottant (7) vers ensemble d'antenne (25) dans chaque direction de propagation parmi la pluralité de directions de propagation différentes, comprenant la détermination, pour chaque direction de propagation parmi la pluralité de directions de propagation sur la base du signal de réflexion électromagnétique résultant de la réflexion du signal de transmission au niveau de la zone cible, d'une mesure indiquant une quantité d'énergie réfléchie circulant à partir de la première zone cible vers l'ensemble d'antenne ;
estimation d'une inclinaison (α₁) de la première zone cible (15a) sur la base de la mesure ; et
détermination de l'état du toit flottant sur la base de l'inclinaison estimée.

2. Procédé selon la revendication 1, comprenant en outre les étapes suivantes :
comparaison de l'inclinaison estimée (α₁) de la première zone cible (15a) avec un seuil d'inclinaison prédéfini ; et
la génération, lorsque l'inclinaison estimée dépasse le seuil d'inclinaison prédéfini, d'un signal indiquant celle-ci.

3. Procédé selon la revendication 1 ou 2, dans lequel :
le procédé comprend en outre l'étape de détermination, sur la base d'un rapport temporel entre le signal de transmission (S_{T}) et le signal de réflexion (S_{R}), d'une mesure indiquant une distance verticale entre une position de référence du système de jauge de niveau à radar (11) et le toit flottant (7) ; et
la détermination de l'état du toit flottant est en outre basée sur la mesure indiquant la distance verticale.

4. Procédé selon l'une quelconque des revendications précédentes, dans lequel :
le procédé comprend en outre l'étape d'acquisition d'une mesure indiquant un niveau de remplissage du produit dans la cuve (3) ; et
la détermination de l'état du toit flottant (7) est en outre basée sur la mesure indiquant le niveau de remplissage.

5. Système de surveillance de toit flottant (1), pour la détermination d'un état d'un toit flottant (7) d'une cuve de stockage (3), le système de surveillance de toit flottant (1) incluant un système de jauge de niveau à radar (11) destiné à être placé au-dessus du toit flottant (7), le système de jauge de niveau à radar (11) comprenant :
un émetteur-récepteur (23) destiné à générer, émettre et recevoir des signaux électromagnétiques ;
un ensemble d'antenne (25) accouplé à l'émetteur-récepteur (23) pour le rayonnement d'un signal de transmission électromagnétique (S_{T}) vers le toit flottant (7) et la réception d'un signal de réflexion électromagnétique (S_{R}) résultant de la réflexion du signal de transmission (S_{T}) par le toit flottant (7) ; et
un circuit de traitement (27) configuré pour :
commander l'émetteur-récepteur (23) pour générer et émettre un signal de transmission électromagnétique (S_{T}) ;
**caractérisé en ce que** le circuit de traitement est en outre configuré pour :
l'évaluation sélective, sur la base d'un signal de réflexion électromagnétique résultant de la réflexion du signal de transmission au niveau du toit flottant et reçu par l'émetteur-récepteur, d'une énergie réfléchie circulant à partir du toit flottant vers l'ensemble d'antenne dans chaque direction de propagation parmi une pluralité de directions de propagation différentes ;
l'exécution des étapes du procédé selon la revendication 1.

6. Système de surveillance de toit flottant (1) selon la revendication 5, comprenant en outre au moins un premier dispositif de réflecteur à microondes (13a) disposé au moins dans la première zone cible (15a) du toit flottant (7) .

7. Système de surveillance de toit flottant (1) selon la revendication 6, dans lequel le premier dispositif de réflecteur à microondes (13a) comprend un rétro-réflecteur (35a) pour le rayonnement de microondes.

8. Système de surveillance de toit flottant (1) selon la revendication 6 ou 7, dans lequel le système de surveillance de toit flottant (1) comprend le premier dispositif de réflecteur à microondes (13a) disposé dans la première zone cible (15a) du toit flottant (7) et un deuxième dispositif de réflecteur à microondes (13b) destiné à être disposé dans une deuxième zone cible (15b) sur le toit flottant, espacée latéralement de la première zone cible.

9. Système de surveillance de toit flottant (1) selon la revendication 8, dans lequel :
le premier dispositif de réflecteur à microondes (13a) comprend un premier dispositif de détection (37a) destiné à détecter une propriété du toit flottant (7) au niveau de la première zone cible (15a) et un premier circuit de communication (39a) destiné à fournir un signal indiquant la propriété détectée ; et
le deuxième dispositif de réflecteur à microondes (13b) comprend un deuxième dispositif de détection (37b) destiné à détecter une propriété du toit flottant (7) au niveau de la deuxième zone cible (15b) et un deuxième circuit de communication (39b) destiné à fournir un signal indiquant la propriété détectée.
